# EUROPEAN PATENT SPECIFICATION

(11) **EP 0 677 676 B1**
(45) Date of publication and mention of the grant of the patent: **14.06.2000**
(21) Application number: 95201090.8
(22) Date of filing: 11.04.1990
(51) Int. Cl.: F16D 65/08, B23P 15/18, F16D 65/04, B23P 25/00

(54) **Drum brake assembly**
Trommelbremse
Frein à tambour

(30) Priority: 12.04.1989 AU PJ364989
(43) Date of publication of application: 18.10.1995
(62) Divisional of application: 90303923.8
(73) Proprietor: PBR AUTOMOTIVE PTY LTD, East Bentleigh, VIC 3165 (AU)
(72) Inventor: Wang, Nui, Croydon, Victoria 3136 (AU)
(74) Representative: Gordon, Michael Vincent

(56) References cited:
- EP-A- 0 392 829
- DE-B- 1 269 454
- GB-A- 1 053 617
- GB-A- 1 090 058
- US-A- 1 773 584
- US-A- 1 926 064
- US-A- 2 016 875
- US-A- 2 032 864

## Description

This invention relates to a method of forming a brake member for a drum brake assembly having a brake shoe. The invention will be described with particular reference to a drum brake assembly for use in conjunction with a disc brake, but it is to be understood that the invention has a wider application.

Drum brakes are known to have certain advantages over disc brakes, particularly in park brake applications. Those advantages include superior braking force in some situations, and, where used as a park brake, the continued application of braking force where temperature variations occur whilst the brake is on. It has been found, for example, with certain disc type park brake assemblies, that where the temperature falls after the park brake has been applied, contraction of the brake components as a consequence of the temperature fall and a reduction of coefficient of friction with temperature fall will cause a relaxation of the braking force and possibly result in a vehicle run away.

A problem, however, with prior art drum brake assemblies is that they are of complex construction and assembly, and are generally comprised of a large number of components and parts. A typical prior art drum type park brake assembly uses a total of 31 separate parts per wheel, of which there are 18 different components. Such a large number of parts results in the park brake assembly being expensive and time consuming to assemble and fix to a vehicle.

A further problem with drum type park brake assemblies when used in conjunction with disc brake assemblies is that the park brake is generally only used after the vehicle has been brought to a stop by the disc brake. Thus, the drum shoe friction linings do not become properly bedded by wearing against the inner surface of the drum as in the case where the drum brake serves the function of both service and park brakes. Unless there is a near perfect match between the diameters of the lining when the brake is applied and the drum the shoe will not properly contact the drum over its entire surface and an inferior braking force will result.

GB-A-1053617 discloses a drum brake assembly including a single substantially circular brake shoe for use in conjunction with a disc brake.

US-A-2032864 describes a method of forming a brake member having a single substantially circular brake shoe with as friction lining mounted on its radially outer face, by mounting the brake member on a rotatable jig having expansion means to engage opposed ends of the brake shoe to urge them apart when the brake member is surrounded by a pair of semicircular jaws to urge the outer surface of the brake member into tight contact with the jaws. The brake member is then clamped into this expanded condition, the jaws are removed, and then the outer surface of the brake member is ground as the jig is rotated. The brake member is subsequently removed from the jig.

According to this invention a method of forming a brake member for a drum brake includes the steps of:
forming a shoe of said brake member from a high strength resilient material into a substantially circular form having two separate opposed ends, mounting a friction lining to the radially outer face of said shoe to form said member, mounting said member on a rotatable jig which includes a body, centralising pins and shoe expansion means connected to said body, positioning said member on said jig with said centralising pins centralising said member on said jig and with said expansion means located between said ends of said shoe to expand said shoe diametrically by causing said expansion means to engage each of said ends and thereby enlarge the separation between said ends to a predetermined extent, said expansion of said shoe occurring without confinement of the radially outer surface of the member so that, in the expanded condition, the configuration of said outer surface of the member is determined solely by the way in which said member responds to enlargement of the separation between said ends of said shoe to said predetermined extent, securing said shoe to said body while the ends of said shoe remain held separated to said predetermined extent by said expansion means and without changing said outer surface configuration of said member, rotating said jig and thereby rotating said member about an axis of rotation of said jig, removing friction lining material from said outer surface of said member during said rotation so as to form said outer surface of the diametrically expanded member as a cylindrical surface having a predetermined diameter, and removing said shoe from said jig so that said member returns to an unexpanded condition at which said outer surface has a non-uniform radius of curvature.

An embodiment of the invention is described in detail in the following passages of the specification which refer to the accompanying drawings. The drawings, however, are merely illustrative of how the invention might be put into effect, so that the specific form and arrangement of the various features as shown is not understood as limiting on the invention.

In the drawings:
Figure 1 shows an exploded perspective view of a drum brake assembly
Figure 2 shows a cross-sectional plan view of the assembly of Figure 1;
Figure 3 shows a cross-sectional plan view of an alternative assembly
Figure 4 shows a cross-sectional view along line IV-IV of Figure 2;
Figure 5 shows a perspective view of apparatus for grinding a drum brake shoe; and
Figures 6a-6f show different stages in the grinding of a brake shoe according to the method of the invention.

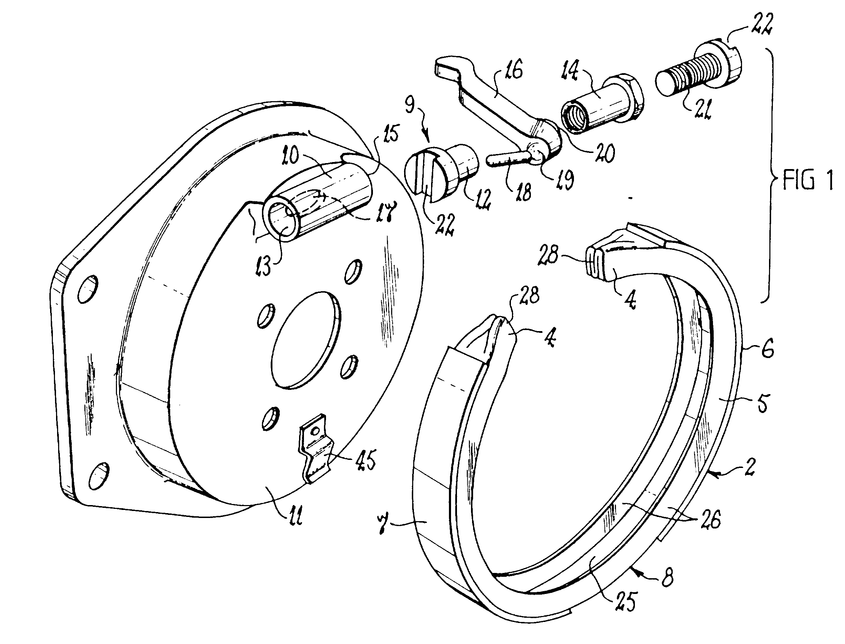

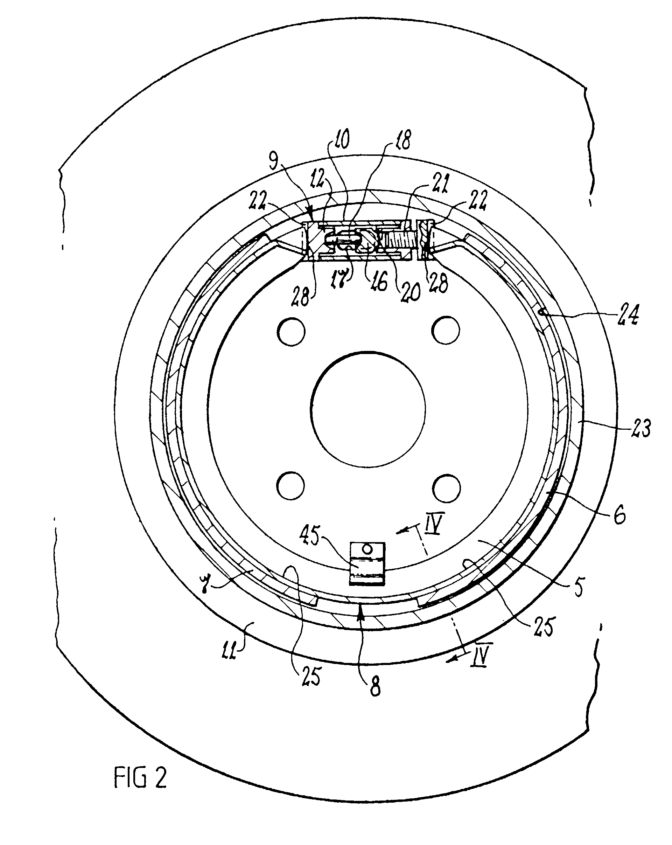

A park brake assembly as shown in Figures 1 and 2 of the drawings includes a brake member 2 which has been formed as a substantially closed circle, but with a gap being defined between the ends 4 of the brake member.

The brake member 2 is comprised of a shoe 5 and a pair of friction linings 6 and 7 adhered or otherwise fixed in known manner to the radially outer face 8 of the shoe 5. The friction linings 6 and 7 will be made of conventional material as will be known by one skilled in the art, and the shoe 5 will be formed of a resilient material such as, but not limited to, mild steel, composite materials, high strength plastics, and sintered metals.

Any appropriate mechanism can be used to move the ends 4 of the shoe 5 apart. The mechanism may, for example, be mechanical or hydraulic. As shown in Figures 1 and 2 the mechanism 9 includes a tubular sleeve 10 which is fixed to a plate like support 11 which serves to provide structure for the brake assembly and also serves as a dust cover for a disc brake assembly (not shown). The sleeve 10 thus serves as an abutment for the brake member 2. A tappet 12 locates in one end 13 of the sleeve 10, and an adjusting nut 14 locates in the other end 15 of the sleeve 10. An actuating lever 16 locates between the tappet 12 and the adjusting nut 14 and passes out of the sleeve 10 through an opening 17 in the back face thereof. A push rod 18 fits into a blind bore 19 in one end of the lever 16, and presses against the tappet 12. A knuckle 20 on the opposite side of the lever locates in a recess in the adjusting nut 14. When the lever 16 is moved in use it operates cam-like to move the tappet 12 and nut 14 apart. An adjusting screw 21 screws into the adjusting nut 14 to provide a facility for varying the effective length of the mechanism 9. The tappet 12 and screw 21 each have a groove 22 therein in which the ends 4 of the brake member 2 locate. The lever 16 thus operates in use to urge the ends 4 of the brake member 2 apart into contact with the radially inner surface 24 of a drum 23 shown in Figure 2.

The cross-section shape of the shoe 5 can be of any suitable form although it is important that the shoe is able to properly support the linings 6,7 around the entire circumference of the brake member 2. This differs from prior art band brake type arrangements in which the circumferential band is very flexible in a radial direction and does not adequately support the lining. The radial forces on the lining during braking can be very high and if the shoe distorts inwardly to even a small extent a significant area of the lining will no longer provide an adequate braking force.

However, it is also important that the shoe 5 is resiliently flexible. This differs from some prior art arrangements, such as two shoe drum brakes, where the shoe or shoes are substantially rigid. These prior art shoes require either a plurality of actuators to operate or are pivotable relative to their abutments, and require spring retractors, and are accordingly complicated requiring a large number of components to operate complicated multi-component type arrangement which the present invention seeks to improve on.

The shoe 5 depicted in Figure 1, 2 and 4 is of channel cross-sectional shape comprising a web 25, and a pair of parallel flanges 26 which connect to and are preferably integral with the lateral edges 27 of the web 25 and project radially inwardly. The flanges 26 serve to increase the bending strength of the shoe and thereby resist radially inward deflection of the shoe under braking load. The dimensions of the flanges and web will be selected according to the particular application and anticipated loads. In one example application, which is considered suitable for a motor car park brake, the shoe 5 was made of mild steel, the flanges 26 had a length of 12.5mm and a thickness of 2.5mm, and the web was 25mm wide and had a thickness of 2.5mm. A mild steel shoe will have sufficient resilience to retract the linings 6,7 out of contact with the inner surface of the drum after the brake has been applied. Clearly, other shoe configurations are possible, and specifically envisaged is a T-shaped shoe having the leg of the T-shape projecting radially inwardly to increase the bending strength of the shoe.

It is important that the shoe has some resilience, for the configuration of the shoe is such that it acts as a spring in reducing the diameter of the shoe after the actuating mechanism 9 has been released. The spring force required can be derived from the sectional dimensions of the shoe 5. Thus, no additional springs are necessary in order to retract the brake. It is not, however, essential that the shoe be made from high strength spring type material. It is, however, important that even if the shoe 5 is stressed so that the shoe material reaches its yield point, or beyond, the material will still have sufficient resilience to cause the shoe to retract out of engagement with the drum against which it bears under braking conditions. Thus it is envisaged that the shoe may be made from a mild steel material which is relatively inexpensive but which will provide sufficient resilience for the brake to operate and retract. In some applications it may be advantageous to also include retracting springs.

To assure that the brake member 2 operates effectively, and all components are tightly held in position after assembly, it is envisaged that the diameter of the shoe 5 as manufactured will be smaller than the diameter of the shoe when assembled in the brake-off position. Thus, to assemble the brake it will be necessary to radially expand the shoe 5 to move the ends 4 apart against the action of the shoe resilience so that, when assembled, the spring force in the shoe material will hold the brake components in an assembled and brake-off condition.

It is desirable that the shoe 5 has a substantially constant cross-sectional shape along its entire length. This is desirable because the manufacture of the shoe can then be effected by simply cutting individual shoes from a length of constant cross-section material of suitable dimensions, and then bending those cut lengths into their circular form. Clearly it will not then be necessary to fabricate the shoe from various parts as has heretofore been the norm. Where the radius of the shoe is small it may be necessary to treat the flange or flanges during the bending process to ensure that there is no crimping or bending of the flanges, but this would be a non-complicated manufacturing technique which could be rapidly carried out on a mass production line.

The ends 4 of the shoe are preferably crimped into an M-shape as depicted at numeral 28 in Figure 1 to provide a suitable end formation which will fit into the grooves 22 in the actuating mechanism 9. The crimping of the ends 4 as shown will provide an effective yet simple method of forming the ends so that force transmitted by the actuating mechanism 9 will be transmitted to the shoe substantially along the longitudinal axis of the shoe. It will, however, be appreciated that it will be possible to provide contact points on the shoe which the actuating mechanism will engage which are spaced away from the ends 4.

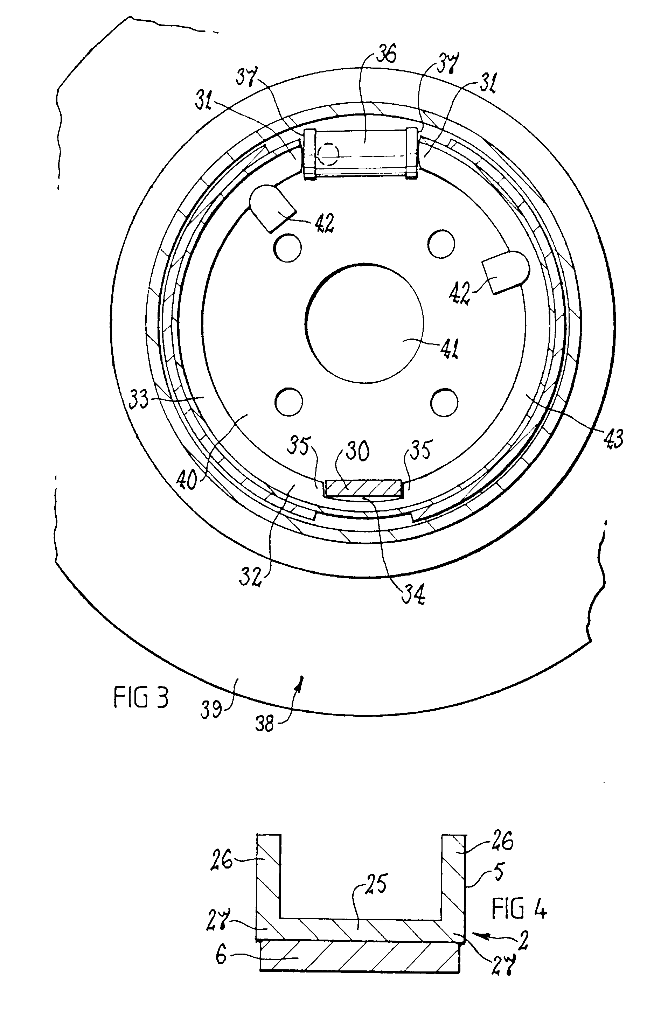

It will be possible for there to be an alternative position for the reaction or abutment point. In the embodiment shown in Figure 3 of the drawings an abutment arm 30 is located midway between the ends 31 of the shoe 32 and can be compared with a conventional "leading-trailing" shoe arrangement. The flanges 33 of the shoe 32 may, for this purpose, each have a rectangular seat 34 cut out of them and the abutment arm may fit neatly into the seats so formed in order to provide anabutment point. End faces 35 at each end of the seat 34 contact the abutment arm 30. In this arrangement the shoe will be substantially free, pivoting relative to the abutment arm 30, as well as possessing the necessary resilience to retract the shoe from its brake-on condition. The actuating mechanism in this application is a hydraulic piston and cylinder assembly 36 and the ends 31 have been rounded to provide contact points which end faces 37 of the piston and cylinder assembly 36 engage. An adjuster mechanism (not shown) will also generally be included in the actuating mechanism.

As previously mentioned, it is preferred that the shoe will be of uniform cross-section over substantially its entire length, but it is not essential that this be so. For example, in certain applications it may be desirable to have a reduced bending strength at a specific zone along the length of the shoe, and the shoe may have a reduced cross-section at that zone. However, for simplicity of manufacture it is preferred that the shoe is of uniform cross-section.

The single brake member according to the invention can be used as both a service and a park brake. Figure 3 shows this configuration. It may be advantageous to secure the shoe 32 to the backing plate or dust shield which protects the inboard side of the disc (not shown). Where a dust shield 38 is provided that shield may have an annular disc portion 39 which is coaxial and face to face with the inboard side of the disc, and a central hub portion 40 having a central opening 41 through which the wheel axle (not shown) passes. The shoe 32 may be mounted to the central hub portion 40 in any convenient way. In the preferred method of mounting the hub portion 40 has a plurality of spring clips 42 integrally formed therewith, and those clips 42 engage the inboard flange 43 of the shoe 32 to hold the shoe in position. The manner of engagement is such that the shoe is able to move relative to the hub parallel to the face of the hub under normal braking conditions, the outer face of the inboard flange 43 sliding on the face of the hub 41.

Optionally a wear shim (not shown) may be interposed between the flange and shoe to facilitate that movement. The spring clips 42 may be formed in any convenient way although it is envisaged they will each take the form of a tab punched out of the hub plate material and remaining joined to the hub along a radially inner edge of the tab. The natural resilience of the hub plate material will provide the spring force for the clips 42. Alternatively, and as shown in Figure 1, a conventional separate hold down spring 45 can be used.

Clearly a simple one piece shoe has other advantages besides just a reduction in the number of components. One of those advantages is that the entire radially outer surface of the lining or linings may be easily machined or ground to ensure the surface is of a true and correct circular configuration. A single machining operation is all that will be required as opposed to the separate operations required for brake assemblies having two shoes. The linings of band brakes are not able to be properly machined since they are too flexible and their circumference is defined by the manner in which they are mounted in the brake assembly.

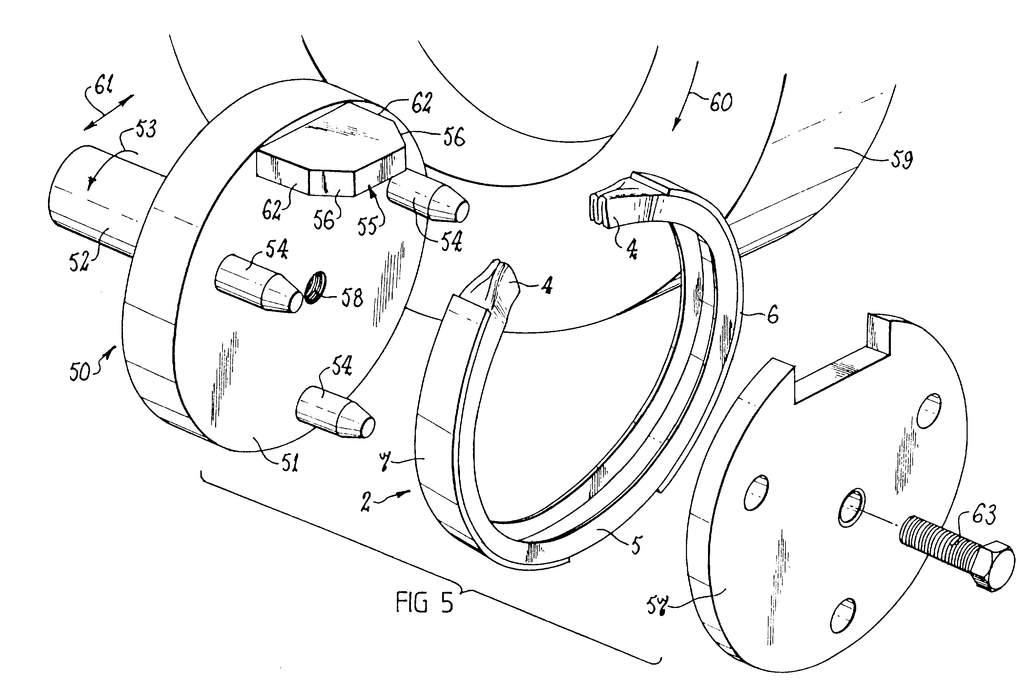

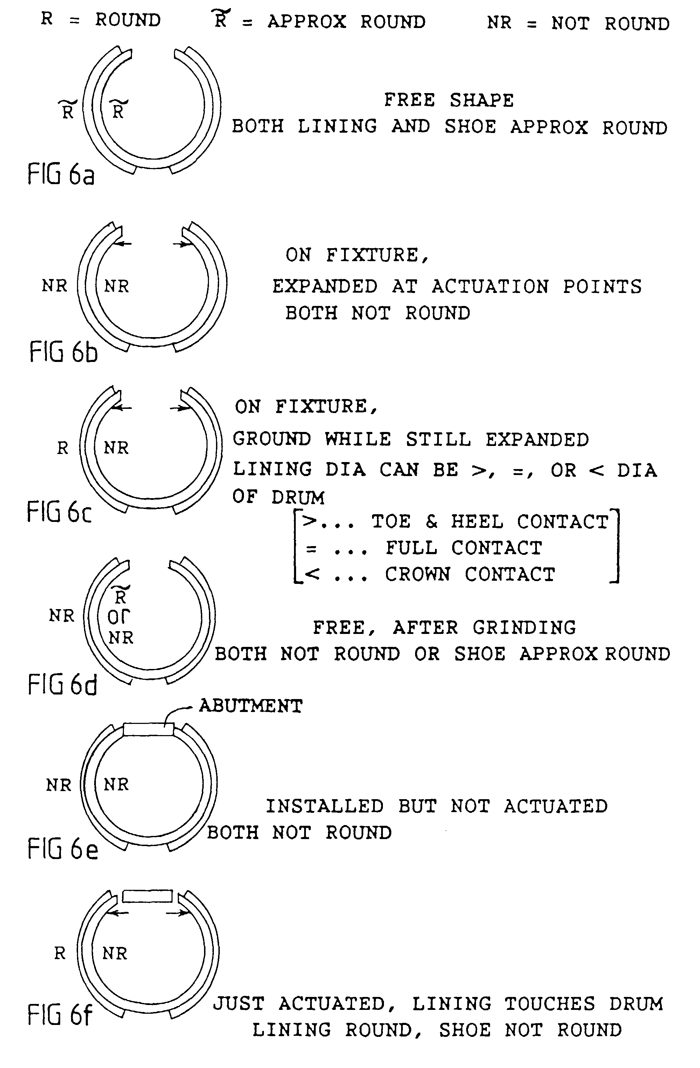

Turning now to Figures 5 and 6 of the drawings, the method of forming a brake member according to the invention will be described in detail with reference to those drawings. As shown, apparatus is used comprising a jig 50 which is in the form of a wheel 51 rotatable on a shaft 52 in the direction of arrow 53. The wheel carries three locating or centralizing pins 54 which serve to hold the brake member 2 on the wheel 51. A shoe expanding block 55 is fixed to the wheel and that block 55 has two tapered surfaces 56 which serve to expand the brake member when it is positioned on the wheel. Thus, the width of the block 55, between contact faces 62, serves to define the extent to which the ends 4 of the brake member 2 are forced apart. A clamping plate 57 is provided for clamping the brake member 2 to the wheel and a bolt 63, which screws into an axial threaded bore 58 in the wheel holds the plate 57 to the wheel. An annular grinding wheel 59 is rotatable in the direction of arrow 60, and the axis of rotation of the grinding wheel is 90° to the axis of rotation of the jig 50. The jig 50 is movable into or out of contact with the grinding wheel in the direction of arrow 61.

The width of the block 55 is selected such that when the brake member 2 is positioned on the jig 50 the brake member is expanded such that the outer surface of the un-machined linings 6, 7 are at a diameter slightly larger than the internal diameter of the drum with which the brake member is to be used, and the shoe is in its "just touching the drum" position.

It is considered important, that the contact faces 62 contact the ends 4 of the brake member 2 at or near the point where the actuating mechanism of the brake assembly will in use contact the brake member 2. This is so that the brake member 2 adopts its in use form during the grinding process.

Turning specifically to Figures 6 of the drawings, the steps in the grinding process are depicted diagrammatically. The meaning of the symbols shown on the drawings are as follows:
NR means "not round"
R means "round"
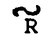 means "approximately round"

As shown in these drawings the shoe 5 and linings 6 and 7 are not drawn to scale to simplify the description.

In Figure 6a the shoe 5 and linings are both approximately round. This is the condition the brake member is in prior to grinding. Figure 6b depicts the brake member 2 after it has been fixed to the jig, but prior to grinding. Both linings 6,7 and shoe 5 are not round in this condition, but the shoe is expanded to its in use position in which the linings would just be touching the inner surface of the drum if they were ground.

Figure 6c depicts the brake member 2 after grinding has been completed whilst the brake member is still held on the jig. The outer surfaces of the linings 6 and 7 are now round, whilst the shoe 5 is not round. The ground diameter of the outer surface of the linings 6 and 7, with the shoe mounted to the jig, can be greater than, the same as, or less than, the diameter of the drum inner surface with which the brake member is to be used. If the diameter of the linings in this expanded condition is greater than the drum surface the resultant brake action in use will be a "heel and toe" contact which may be desirable in some applications. If the lining is ground to the same diameter as the drum surface there will be full contact between the lining and the drum as the brake is applied. If the lining is ground to a diameter which is less than the diameter of the drum surface there will be a crown contact between the linings and the drum when the brake is applied. The usual ground diameter will be the same as the drum inner surface diameter, but it should be noted that a greater or lesser diameter could be selected for certain applications.

Figure 6d depicts the brake member after it has been removed from the jig but before installation in the brake assembly. In this condition the shoe 5 is approximately round (or not round if it has been stressed beyond the yield point of the shoe material) and the linings outer surfaces are not round.

Figure 6e depicts the brake member in its installed condition in which the ends 4 of the brake member are held apart to an extent by an abutment. In this condition both shoe and linings are not round.

In Figure 6f the brake member 2 has been expanded into touching contact with the drum inner surface and the radially outer faces of the linings 6,7 are now round, whilst the shoe 5 is not round. Thus, there is optimum contact between the radially outer faces of the linings 6,7 and the drum immediately the linings contact the drum surface. No bedding of the linings to the drum is required and full braking force will thus be applied as soon as the brake is fully applied. The linings of the brake members shown in Figures 1 to 4 of the drawings will have been ground in like manner prior to being installed in the brake assemblies depicted in those drawings.

The single shoe arrangement described above can be employed in both service brake and park brake applications. Also, it will be possible to incorporate an automatic brake adjustment mechanism should this be deemed desirable for any particular application. The term "single shoe" as used in this specification means a shoe which operates as a single unit. Clearly the shoe may itself be formed from two or more shoe components, joined together permanently or temporarily, which act substantially as a single unit.

## Claims

1. A method of forming a brake member (2) for a drum brake including the steps of:
forming a shoe (5) of said brake member from a high strength resilient material into a substantially circular form having two separate opposed ends (4), mounting a friction lining (6,7) to the radially outer face of said shoe (5) to form said member, mounting said member (2) on a rotatable jig (50) which includes a body (51), centralising pins (54) and shoe expansion means (55) connected to said body (51), positioning said member (2) on said jig (50) with said centralising pins (54) centralising said member (2) on said jig (50) and with said expansion means (55) located between said ends (4) of said shoe (5) to expand said shoe (5) diametrically by causing said expansion means (55) to engage each of said ends (4) and thereby enlarge the separation between said ends (4) to a predetermined extent, said expansion of said shoe (5) occurring without confinement of the radially outer surface of the member (2) so that, in the expanded condition, the configuration of said outer surface of the member (2) is determined solely by the way in which said member (2) responds to enlargement of the separation between said ends (4) of said shoe (5) to said predetermined extent, securing said shoe (5) to said body (51) while the ends (4) of said shoe remain held separated to said predetermined extent by said expansion means (55) and without changing said outer surface configuration of said member (2), rotating said jig (50) and thereby rotating said member (2) about an axis of rotation of said jig (50), removing friction lining material from said outer surface of said member (2) during said rotation so as to form said outer surface of the diametrically expanded member (2) as a cylindrical surface having a predetermined diameter, and removing said shoe (5) from said jig (50) so that said member (2) returns to an unexpanded condition at which said outer surface has a non-uniform radius of curvature.

2. A method according to claim 1, wherein said expansion means comprises a fixed length abutment block (55) mounted on said jig (50), locating said opposite ends (4) of said shoe (5) on opposite sides of said fixed length abutment block (55) automatically enlarging the separation between said ends (4) to said predetermined extent.

3. A method according to claim 1 or 2, wherein said step of expanding said shoe diametrically results in the peripherally outer face of said lining (6,7) being distorted into a non-circular form.

4. A method according to any one of the preceding claims, wherein the lining (6,7) is machined to a circular form having a diameter which is substantially identical to the diameter of the radially inner surface of a drum (23) with which said brake member (2) will operatively be used.

5. A method according to any preceding claim, wherein said shoe is formed of channel shaped material having a web (25) and a pair of parallel flanges (26) extending from lateral edges (27) of said web (25), and said friction lining (6,7) is mounted on the radially outer face of said web (25).

6. A method according to claim 5, including the step of crimping each said end (4) of said shoe (5) so as to move said flanges (26) towards one another at the respective said ends (4) and thereby reduce the width of said shoe (5) at each said end (4).

7. A method according to claim 6, wherein said web (25) is folded at each said end (4) so as to substantially fill the space between said flanges (26).

8. A method according to claim 7, wherein said web (25) is folded at a location substantially midway between said flanges (26), and the transverse face of the shoe (5) at each said end (4) is formed by four thicknesses of the shoe material arranged side by side.

## Patentansprüche

1. Verfahren zur Herstellung eines Bremsbauelements (2) für eine Trommelbremse, wobei das Verfahren folgende Schritte aufweist:
die Formung einer Bremsbacke (5) des Bremsbauelements aus einem hochfesten elastisch federnden Werkstoff in eine im wesentlichen kreisförmige Form mit zwei voneinander getrennten gegenüberliegenden Enden (4), die Anbringung eines Reibbelags (6, 7) an der radialen Außenfläche der Bremsbacke (5) zur Bildung des Bremsbauelements, die Befestigung des Bremsbauelements (2) auf einer drehbaren Spannvorrichtung (50), wobei die Spannvorrichtung einen Körper (51), zentralisierende Stifte (54) und eine mit dem Körper (51) verbundene Bremsbacken-Aufweitvorrichtung (55) aufweist, die Positionierung des Bremsbauelements (2) auf der Spannvorrichtung (50), wobei diese mit zentralisierenden Stiften (54), welche das Bremsbauteil (2) auf der Spannvorrichtung (50) zentralisieren, sowie mit einer Aufweitvorrichtung (55) der Bremsbacke (5) versehen ist, welche zwischen den Enden (4) der Bremsbacke (5) angeordnet ist, wodurch bewirkt wird, daß sich die Bremsbacke (5) durch den Eingriff der Aufweitvorrichtung (55) mit den Enden (4) in diametrale Richtung aufweitet und dabei der Abstand zwischen den Enden (4) auf ein vorbestimmtes Maß vergrößert wird, wobei die Aufweitung der Bremsbacke (5) ohne eine Einengung der radialen Außenfläche des Bremsbauelements (2) erfolgt, so daß die Konfiguration der Außenfläche des Bauelements (2) im ausgedehnten Zustand einzig und allein dadurch bestimmt ist, wie das Bauelement (2) auf die Vergrößerung des Abstands zwischen den Enden (4) der Bremsbacke (5) auf dieses vorbestimmte Maß anspricht, weiter die Befestigung der Bremsbacke (5) am Körper (51), während die Enden (4) der Bremsbacke (5) mit Hilfe der Aufweitvorrichtung (55) in einem bestimmten Abstand getrennt voneinander gehalten werden und ohne daß die Konfiguration der Außenfläche des Bremsbauelements (2) verändert wird, die Drehung der Spannvorrichtung (50) und die damit verbundene Drehung des Bremsbauelements (2) um die Drehachse der Spannvorrichtung (50), die Entfernung von Reibbelag-Werkstoff von der Außenfläche des Bremsbauelements (2) während der Drehung, wodurch sich die Außenfläche des in diametrale Richtung ausgedehnten Bremsbauelements (2) als eine zylindrische Oberfläche mit einem vorbestimmten Durchmesser ausbildet, und das Loslösen der Bremsbacke (5) aus der Spannvorrichtung (50), so daß das Bremsbauelement (2) in einen ungedehnten Zustand, in welchem diese Außenfläche einen ungleichförmigen Krümmungsradius aufweist, zurückkehrt.

2. Verfahren nach Anspruch 1, dadurch gekennzeichnet, daß die Aufweitvorrichtung einen in der Länge festgelegten, auf der Spannvorrichtung (50) befestigten Widerlagerblock (55) aufweist, wodurch die gegenüberliegenden Enden (4) der Bremsbacke (5) an den gegenüberliegenden Seiten dieses in der Länge festgelegten Widerstandsblocks (55) angeordnet werden und eine automatische Vergrößerung des Abstands zwischen den Enden (4) auf die vorbestimmte Abstandslänge erfolgt.

3. Verfahren nach Anspruch 1 oder 2, dadurch gekennzeichnet, daß der Schritt der diametralen Aufweitung der Bremsbacke die Verformung der Umfangs-Außenfläche des Belags (6, 7) in eine nicht kreisförmige Form zur Folge hat.

4. Verfahren nach einem der vorhergehenden Ansprüche, dadurch gekennzeichnet, daß der Belag (6, 7) zur Bildung einer kreisförmigen Form mit einem Durchmesser, der im wesentlichen identisch mit dem Durchmesser der radialen Innfläche einer Bremstrommel (23) ist, bei welcher das Bremsbauelement (2) wirksam eingesetzt werden kann, einer spanabhebenden Bearbeitung unterzogen wird.

5. Verfahren nach einem der vorhergehenden Ansprüche, dadurch gekennzeichnet, daß die Bremsbacke aus einem gerillten Werkstoff, welcher eine Verstärkungsrippe (25) aufweist, gebildet ist, wobei ein Paar paralleler Flansche (26) über die Seitenkanten (27) der Verstärkungsrippe (25) übersteht, und der Reibbelag (6, 7) auf der radialen Außenfläche der Verstärkungsrippe (25) befestigt ist.

6. Verfahren nach Anspruch 5, welches ferner den Schritt des Kräuselns der beiden Enden (4) der Bremsbacke (5) umfaßt, so daß die Flansche (26) an dem jeweiligen Ende (4) zueinander bewegt werden und dadurch die Breite der Bremsbacke (5) an beiden Enden (4) verringert wird.

7. Verfahren nach Anspruch 6, dadurch gekennzeichnet, daß die Verstärkungsrippe (25) an beiden Enden (4) gefaltet ist, so daß der Raum zwischen den Flanschen (26) im wesentlichen ausgefüllt ist.

8. Verfahren nach Anspruch 7, dadurch gekennzeichnet, daß die Verstärkungsrippe (25) an einer Stelle gefaltet ist, welche im wesentlichen mittig zwischen den Flanschen (26) angeordnet ist, und die Querfläche der Bremsbacke (5) an jedem Ende (4) durch viermaliges Anordnen der Stärke des Bremsbacken-Werkstoffs nebeneinander gebildet wird.

## Revendications

1. Procédé de formage d'une pièce de frein (2) pour un frein à tambour incluant les étapes consistant à :
donner à un segment de frein (5) de ladite pièce de frein réalisée avec un matériau élastique très résistant une forme sensiblement circulaire ayant deux extrémités opposées distinctes (4),
monter une garniture de friction (6, 7) sur la surface radialement extérieure dudit segment de frein (5) pour former ladite pièce,
monter ladite pièce (2) sur une monture tournante qui inclut un corps (51), des broches de centrage (54) et des moyens d'extension de segment de frein (55) raccordés audit corps (51),
positionner ladite pièce (2) sur ladite monture (50) au moyen desdites broches de centrage (54) qui réalisent le centrage de ladite pièce (2) sur ladite monture (50) et desdits moyens d'extension (55) agencés entre lesdites extrémités (4) dudit segment de frein (5) pour étendre ledit segment de frein (5) diamétralement en commandant l'engagement desdits moyens d'extension (55) avec chacune desdites extrémités (4) et pour augmenter par conséquent l'écartement entre lesdites extrémités (4) sur une distance prédéterminée, ladite extension dudit segment de frein (5) étant réalisée sans être limitée par la surface radialement extérieure de la pièce (2) de sorte que, à l'état étendu, la configuration de ladite surface extérieure de la pièce (2) est déterminée uniquement par la façon dont ladite pièce (2) répond à l'augmentation de l'écartement entre lesdites extrémités (4) dudit segment de frein (5) sur ladite distance prédéterminée,
fixer ledit segment de frein (5) audit corps (51) tandis que les extrémités (4) dudit segment de frein restent maintenues séparées de ladite distance prédéterminée par lesdits moyens d'extension (55) et sans changer ladite configuration de surface extérieure de ladite pièce (2),
faire tourner ladite monture (50) et par conséquent ladite pièce (2) autour d'un axe de rotation de ladite monture (50),
retirer de la matière constituant les garnitures de friction de ladite surface extérieure de ladite pièce (2) pendant ladite rotation de façon à former ladite surface extérieure de la pièce (2) étendue diamétralement pour obtenir une surface cylindrique ayant un diamètre prédéterminé, et
retirer ledit segment de frein (2) de ladite monture (50) de sorte que ladite pièce (2) retourne à un état non étendu dans lequel ladite surface extérieure a un rayon de courbure non uniforme.

2. Procédé selon la revendication 1, dans lequel lesdits moyens d'extension comprennent un bloc d'appui (55) de longueur fixe monté sur ladite monture (50), qui positionne lesdites extrémités opposées (4) dudit segment de frein (5) sur des côtés opposés dudit bloc d'appui (55) de longueur fixe augmentant automatiquement l'écartement entre lesdites extrémités (4) sur ladite distance prédéterminée.

3. Procédé selon la revendication 1 ou 2, dans lequel ladite étape consistant à étendre ledit segment de frein diamétralement entraîne la déformation de la face périphérique extérieure de ladite garniture (6, 7) en une forme non circulaire.

4. Procédé selon l'une quelconque des revendications précédentes, dans lequel la garniture (6, 7) est usinée pour donner une forme circulaire ayant un diamètre qui est sensiblement égal au diamètre de la surface radialement intérieure d'un tambour (23) avec lequel ladite pièce de frein (2) sera fonctionnellement utilisée.

5. Procédé selon l'une quelconque des revendications précédentes, dans lequel ledit segment de frein est réalisé avec un matériau en forme de U comportant un dos (25) et une paire de flasques parallèles (26) s'étendant depuis les bords latéraux (27) dudit dos (25), et dans lequel ladite garniture de friction (6, 7) est montée sur la face radialement extérieure dudit dos (25).

6. Procédé selon la revendication 5, incluant l'étape consistant à plier chaque dite extrémité (4) dudit segment de frein (5) de façon à déplacer lesdits flasques (26) en direction l'un de l'autre auxdites extrémités (4) respectives et à réduire par voie de conséquence la largeur dudit segment de frein (5) à chaque dite extrémité (4).

7. Procédé selon la revendication 6, dans lequel ledit dos (25) est plié à chaque dite extrémité (4) de façon à remplir sensiblement l'espace entre lesdits flasques (26).

8. Procédé selon la revendication 7, dans lequel ledit dos (25) est plié en un emplacement situé sensiblement à mi-chemin entre lesdits flasques (26), et la face transversale du segment de frein (5) à chaque dite extrémité (4) est formée par quatre couches agencées côte à côte du matériau constituant le segment de frein.
